# EUROPEAN PATENT APPLICATION

(11) **EP 3 214 254 A1**
(43) Date of publication of application: **06.09.2017**
(21) Application number: 17159252.0
(22) Date of filing: 03.03.2017
(51) Int. Cl.: E06B 7/02, F24F 12/00, F24F 13/06, F24F 7/08

(54) **VENTILATION DEVICE, VENTILATION WINDOW AND HEAT EXCHANGER**

(30) Priority: 03.03.2016 FI 20165175
(71) Applicant: Skaala Production Oy, 62375 Ylihärmä (FI)
(72) Inventor: Hänninen, Petri, 60510 Hyllykallio (FI)
(74) Representative: Genip Oy

(57) **Abstract**

For the achievement of ventilation with a quieter operating sound and/or for the achievement of a greater air flow volume per a unit of time of a ventilation device (100), a ventilation device (100) is proposed, where the fresh air duct (65, 62A, 68) and the exhaust air duct (66, 62B, 69) have been arranged to run in the first vertical direction side by side without crossing each other, first in the first direction against each other and then after a bend (34, 35) in the opposite vertical direction still against each other, ending up in a counter flow heat exchanger (62), where the inlet and outlet of the fresh air duct (62A) of the counter flow heat exchanger and of the exhaust air duct (62B) of the counter flow heat exchanger are at the opposite ends of the counter flow heat exchanger (62) mutually on the same side, in which case the crossing of the fresh air duct (65, 62A, 68) and the exhaust air duct (66, 62B, 69) with each other on the outside of the counter flow heat exchanger (62) is avoidable. Also contains an independent claim for a ventilation window.

## Description

### Field of invention

The invention is related to the field of building technology and in particular to the implementation of mechanical ventilation. On the other hand, the invention is also related to heat exchangers.

### Technical background

Skaala Production Oy has made considerable investments in product development in order to bring to the market ventilation devices installable in a window and windows which are or can be equipped with a ventilation device.

By means of ventilation devices installable in a window and by means of windows equipped with a ventilation device, it is possible to implement room-specific or decentralised ventilation in buildings. Ventilation devices installable in a window and windows equipped with a ventilation device can either form a ventilation system in themselves or contribute jointly as part of a central ventilation system. A central ventilation system would typically also include at least centralised air exhaust through ceiling valves at least in the bathroom and toilet facilities and possibly also in the kitchen.

One advantageous characteristic of decentralised or room-specific ventilation implemented by means ventilation devices installable in a window or windows equipped with a ventilation device is that for example in residential use it is possible to bring air taken from the outside into the interior in facilities where the users spend relatively much time. When the quality of air deteriorates, ventilation can be intensified locally by increasing the volume flow of a ventilation device installable in a window or of a window equipped with a ventilation device.

### Objective of invention

The objective of the ventilation device according to the invention is to reduce the pressure loss caused by the ducts of the ventilation device. This objective can be accomplished by means of the ventilation device according to claim 1.

The objective of the ventilation window according to the invention, equipped with the ventilation device, is to enable ventilation with a quieter operating sound and/or a greater air flow volume per unit of time. This objective can be accomplished by means of the ventilation window according to claim 15.

The dependent claims describe the advantageous aspects of the ventilation device.

### Advantages of invention

The ventilation device comprises at least one fresh air duct which is in a flow connection between the exterior and interior and at least one exhaust air duct which is in a flow connection between the interior and exterior, which fresh air duct and exhaust air duct run through a counter flow heat exchanger. In addition to this, the ventilation device comprises air moving apparatuses - such as at least one blower - in order accomplish an air flow both through the fresh air duct and through the exhaust air duct.

The fresh air duct and exhaust air duct have been arranged to run in the first vertical direction side by side without crossing each other, first in the first direction against each other and then after a bend in the opposite vertical direction still against each other, ending up in a counter flow heat exchanger, where the inlet and outlet of the fresh air duct of the counter flow heat exchanger and of the exhaust air duct of the counter flow heat exchanger are at the opposite ends of the counter flow heat exchanger mutually on the same side, in which case the crossing of the fresh air duct and exhaust air duct with each other on the outside of the counter flow heat exchanger is avoidable.

The ventilation duct arrangement enables the maximum utilisation of the cross-sectional area of the ventilation device. This is of particular advantage if the ventilation device is elongated and intended to be used in the vertical position. Such a ventilation device can be used especially advantageously when it is installed in the vertical frame in a ventilation window (for example in the left frame, right frame or perhaps a vertical intermediate frame).

The fresh air duct advantageously comprises a pre-heating duct and the exhaust air duct advantageously comprises a suction duct, which run in the vertical direction side by side. Moreover, the pre-heating duct and suction duct best run on the same level.

The bend has advantageously been implemented not only to turn the current air flow to a different vertical direction but also to transfer the air flow from the first level to the second level. The counter flow heat exchanger is best on the second level.

The fresh air duct and exhaust air duct are most advantageously limited at least partially to a rubber elastic layer. In this case, the rubber elastic layer can seal the fresh air duct and exhaust air duct air-tightly from each other.

The rubber elastic layer can be fastened to the inner surface of the casing of the ventilation device, and the sealing can be implemented by compressing the rubber elastic layer between the casing and internal structure of the ventilation device.

The fresh air duct advantageously comprises a jet flow duct in the flow direction after the counter flow heat exchanger. The jet flow duct can be arranged to turn the inlet air from the horizontal level upwards, most advantageously 15-75 degrees.

In addition to this or as an alternative to this, the exhaust air duct can comprise a jet flow duct in the flow direction after the counter flow heat exchanger. This jet flow duct has most preferably been arranged to turn the waste air from the horizontal level downwards, most advantageously 15-75 degrees.

The air moving apparatuses most advantageously comprise an exhaust air blower and an inlet air blower, which have been sealed from the pressure side.

It is possible to dampen the operating sound of the ventilation device effectively without significantly reducing the magnitude of the volume flow of air travelling through the ventilation device, if a sound trap is installed in the inlet of the exhaust air of the ventilation device in order to dampen the operating sound coming from the air moving apparatus. In this case, the sound trap is implemented so that the exhaust air going to the air moving apparatus goes around the sound trap. The sound trap most advantageously comprises at least one damping sheet, which in its simplest configuration can include or be cut from recycled foam sheet. The sound trap is most advantageously implemented by means of at least one damping sheet installed in the apparatus casing and most preferably cut to shape.

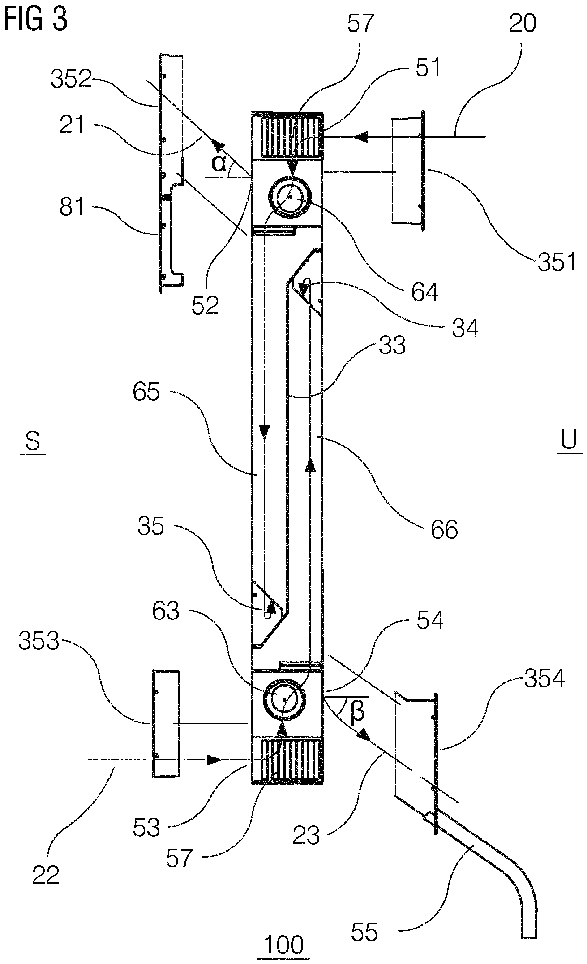

The damping sheet can be installed so that the upper edge of the damping sheet is on the level of the upper edge of the filter or higher. In this case, the damping sheet covers essentially the filter location in the height direction. The structure works as a sound trap for the operating sound of the exhaust air blower of the ventilation device: the exhaust air blower located in the flow direction after the filter sucks exhaust air through a nozzle. In practice, the exhaust air flows from above the damping sheet past the damping sheet and through the filter located beneath the upper edge of the damping sheet. After the filter, the exhaust air blower pushes the air flow into the suction duct (see FIG 3). The operating sound of the exhaust air blower comes through the filter and is first directed at the damping sheet, which has a considerable impact on the sound level of the ventilation device. On the other hand, there is an opening in the casing of the ventilation device at the damping sheet, which opening reduces the resonance of sound in the casing.

The ventilation window comprises a frame and at least one sash, which determines the light opening area, and at least one pane fastened to the sash, as well as the ventilation device according to the first aspect of the invention, installed in the vertical frame.

The heat exchanger (which is especially advantageously a counter flow heat exchanger) comprises the first and second channel, the inlet and outlet of both of which are at the opposite ends of the heat exchanger and moreover so that the inlet and outlet of both channels are mutually on the same side of the heat exchanger. By means of the heat exchanger, when it is used as a counter flow heat exchanger, it is possible to avoid the compensation of the crossing of the flow ducts (in other words the cross-wise layout of the flow ducts), which was needed in the counter flow heat exchangers used previously by the applicant on the outside of the counter flow heat exchanger, and the resulting reduction in the cross-sectional area of the flow ducts in the ventilation device.

### List of drawings

In what follows, the ventilation device and ventilation window are presented in more detail by means of the exemplary embodiments shown in the enclosed drawings FIG 1 - FIG 11. Of the drawings:
- FIG 1: shows the ventilation device installed in the ventilation window, viewed in a perspective from the right front side, from the interior side;
- FIG 2: shows the ventilation device installed in the ventilation window, viewed in a perspective from the left rear side, from the exterior side;
- FIG 3: shows the duct structure of the ventilation device with the casing removed, from the first direction;
- FIG 4: shows the duct structure of the ventilation device (especially the fresh air duct of the counter flow heat exchanger and the exhaust duct of the counter flow heat exchanger) with the casing removed, from the second direction;
- FIG 5 and 9: show the structure of the ventilation device with the cover of the casing removed, viewed in a perspective from two directions;
- FIG 6: shows the cross section of the ventilation device at location VI-VI (cf. FIG 5);
- FIG 7: shows detail VII of the cross section VI-VI of the ventilation device when the cover of the casing is in place;
- FIG 8: shows the electric system of the ventilation device;
- FIG 10: shows the casing of the ventilation device when the internal structure of the ventilation device has been removed; and
- FIG 11: shows a cross section of the ventilation device at the inlet of the exhaust air duct.

The same reference numbers refer to the same technical characteristics in all drawings.

### Detailed description

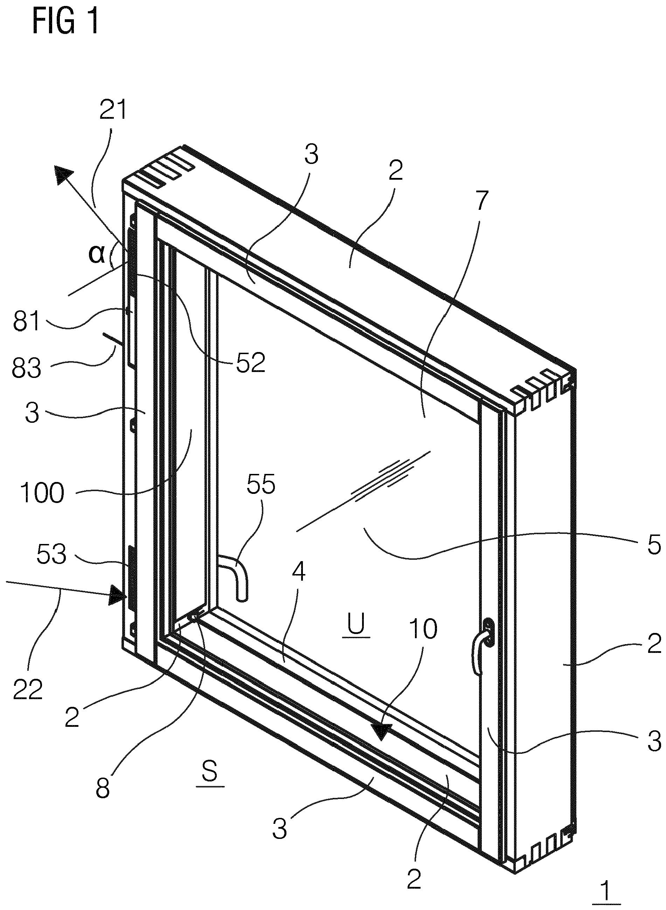

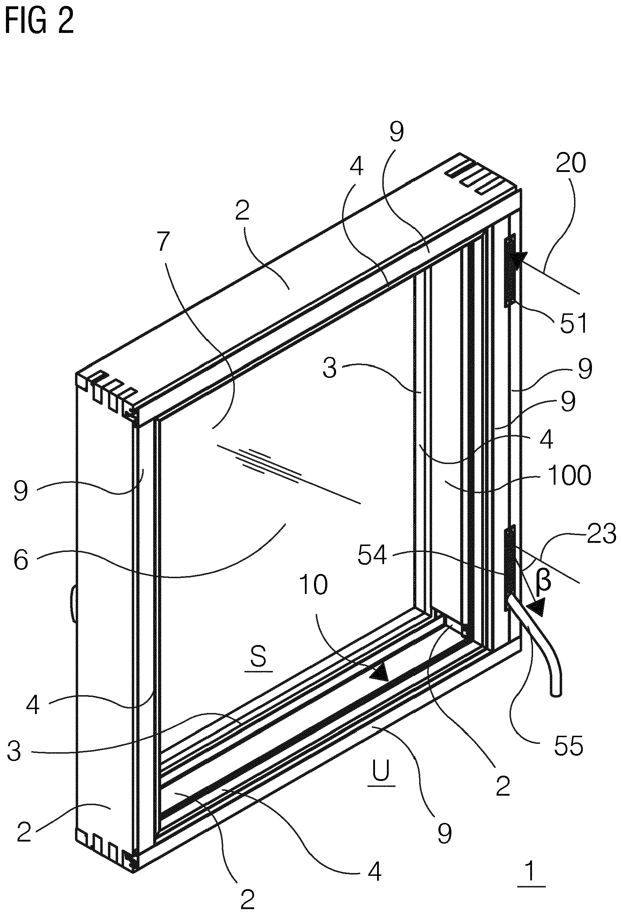

FIG 1 and 2 show a ventilation device 100 installed in a ventilation window 1, viewed in a perspective from the right front side, from the interior S side (FIG 1), and from the left front side, from the exterior U side (FIG 2).

The ventilation window 1 comprises a frame 2. In addition to this, the ventilation window 1 comprises an outer sash 4 arranged in connection with the frame 2, to which outer sash 4 at least one pane 6 has been fastened, and an inner sash 3 arranged in connection with the frame 2, to which inner sash 3 at least one pane 5 has been fastened. The ventilation window 1 can have frame lining 9 to cover the frame 2 and the outer sash 4 from the exterior U side.

The outer sash 4 and the inner sash 3 have been fastened to the frame 2 or one of the sashes 3, 4 has been fastened to the frame 2 and the other sash 3, 4 has been fastened to a sash fastened to the frame 2.

In this way, an intermediate space 10 remains between the outer sash 4 and the inner sash 3. The outer sash 4 and the inner sash 3 together define the light opening area 7.

Alternatively, the ventilation window 1 can be implemented without the intermediate space 10, in other words with one sash.

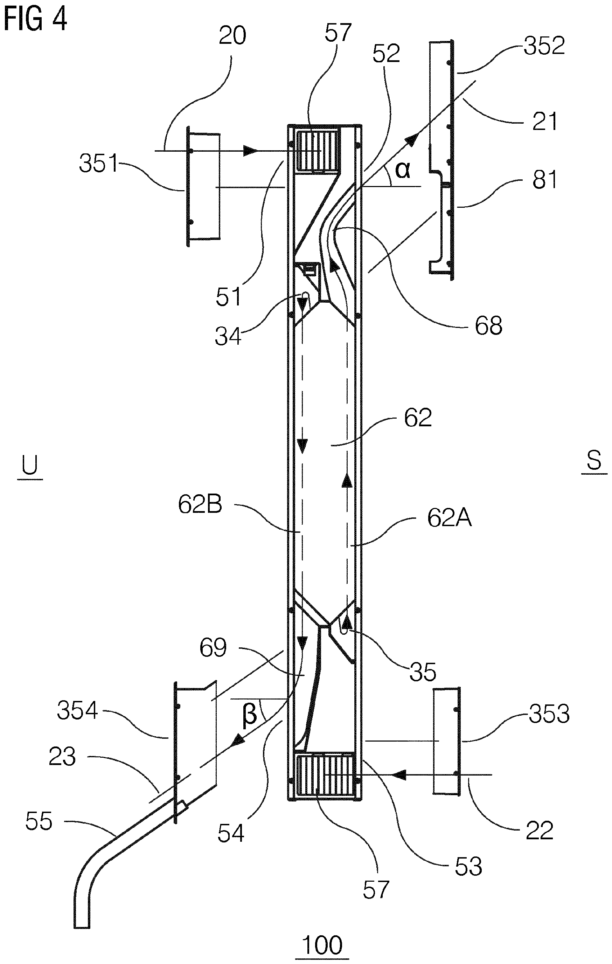

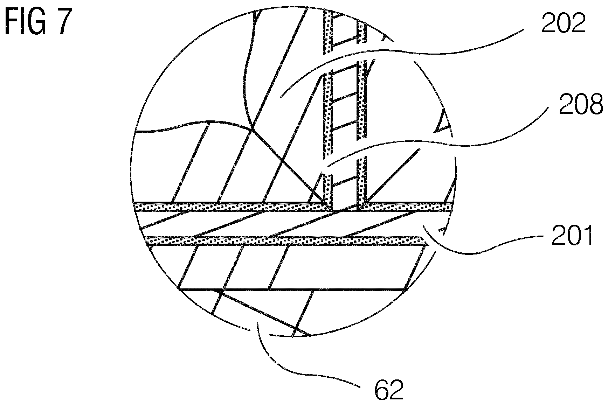

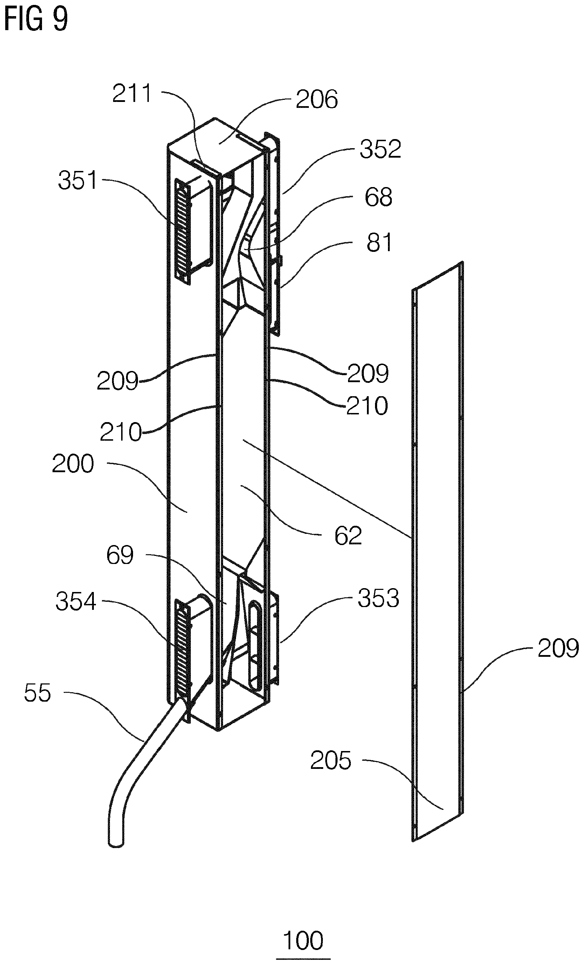

The structure and functioning of the ventilation device 100 are presented in more detail below in connection with FIG 3-10. The internal structure and functioning of the ventilation device 100 advantageously used in connection with the fresh air duct and exhaust air duct are disclosed in more detail in FIG 3 and 4.

The ventilation device 100 comprises at least one fresh air duct (pre-heating duct 65, fresh air duct 62A of counter flow heat exchanger, jet flow duct 68) which is in a flow connection between the exterior U and interior S and at least one exhaust air duct (suction duct 66, exhaust air duct 62B of counter flow heat exchanger, jet flow duct 69) which is in a flow connection between the interior S and exterior U, which fresh air duct and exhaust air duct run through a counter flow heat exchanger 62. The method of implementation of the fresh air duct and exhaust air duct in terms of the jet flow ducts can also be some other, in other words different from that presented here.

The ventilation device 100 further comprises air moving apparatuses (exhaust air blower 63, inlet air blower 64) in order accomplish an air flow both through the fresh air duct and through the exhaust air duct. The method of implementation of the air moving apparatuses can also be some other, in other words different from that presented here.

The ventilation device 100 is most advantageously elongated and used in the vertical position.

The ventilation device 100 sucks fresh air 20 from its upper part from the exterior U to the inlet 51 most advantageously through a nozzle 351, most advantageously by means of an electrically-operated inlet air blower 64 installed on the pressure side. When the inlet air blower 64 has been installed on the pressure side, it is more easily sealable. The inlet air blower 64 pushes the air flow into the pre-heating duct 65, which runs in accordance with FIG 3 most advantageously in the vertical direction from above downwards. After the pre-heating duct 65, the air flow changes the level and direction (cf. FIG 3) in the internal structure of the ventilation device 100, namely in accordance with FIG 4 into the fresh air duct 62A of the counter flow heat exchanger, after which the air flow continues into the jet flow duct 68, where the air flow converts at least partially, if not even completely, into a jet flow, to be released through the outlet 52 and a nozzle 352 most preferably located in connection with the outlet 52 as inlet air 21 most advantageously directed diagonally upwards.

Correspondingly, the ventilation device 100 sucks exhaust air 22 from its lower part from the interior S to the inlet 53 most advantageously through a nozzle 353, most advantageously by means of an electrically-operated exhaust air blower 63 installed on the pressure side. When the exhaust air blower 63 has been installed on the pressure side, it is more easily sealable. The exhaust air blower 63 pushes the air flow into the suction duct 66, which runs most advantageously in accordance with FIG 3 in the vertical direction from below upwards. After the suction duct 66, the air flow changes the level and direction (cf. FIG 3) in the internal structure of the ventilation device 100, namely in accordance with FIG 4 into the exhaust air duct 62B of the counter flow heat exchanger, after which the air flow continues into the jet flow duct 69, where the air flow converts at least partially, if not even completely, into a jet flow, to be released through the outlet 54 and a nozzle 354 most preferably located in connection with the outlet 52 as waste air 23 most advantageously directed diagonally downwards.

The jet flow duct 68 has most advantageously been arranged to turn the inlet air 21 from the horizontal level upwards. The drawings make reference to a trailing angle α of the inlet air 21, which trailing angle α is most advantageously 15-75° upwards from the horizontal level. The jet flow duct 69 has most advantageously been arranged to turn the waste air 23 from the horizontal level downwards. The drawings make reference to a trailing angle β of the waste air 23, which trailing angle β is most advantageously 15-75° downwards from the horizontal level.

By means of the arrangement presented here, in other words by means of the change of the level and direction of the suction duct 66 and of the pre-heating duct 65 before the corresponding ducts of the counter flow heat exchanger 62 (exhaust air duct 62B of the counter flow heat exchanger and fresh air duct 62A of the counter flow heat exchanger, respectively), it is possible to utilise the cross-sectional area of the ventilation device 100 better than in the ventilation devices described in the applicant's Finnish patent applications 20145578, 20145779, 20145780, 20145781, 20155844, 20155845, 20155846, 20155847, 20155848, 20155849, 20155850, which are still secret when this is being written, and in international patent applications PCT/IB2015/056399, PCT/IB2014/064294, PCT/IB2015/056400, PCT/IB2015/056401. This advantage is significant not only in that it enables the manufacture of a ventilation device with an especially compact cross-sectional area, but also in that when using the arrangement described here in a ventilation device described in said applications, due to the larger attainable cross-sectional area of the ducts, the pressure loss in the ducts of the ventilation device decreases, in which case: i) it is possible to decrease the flow velocity of the air flow in order to carry the same amount of air as with the ventilation devices described in the secret applications, ii) it is possible to increase the amount of air produced by the air flow in a unit of time using the same flow velocity as with the ventilation devices described in the secret applications. By means of the mode in accordance with aspect i), it is possible to decrease the operating sound of the ventilation device 100. By means of the mode in accordance with aspect ii), it is possible to improve the ventilation capacity of the ventilation device 100.

On the other hand, it is also possible to increase the energy efficiency of the ventilation device 100 when the pre-heating duct 65 and the suction duct 66 run side by side isolated by a separating wall 33. On the other hand, the functioning of the ventilation device 100 is very efficient also because the flow directions in the counter flow heat exchanger 62 run in a normal operating situation (where it is colder outdoors than indoors) in the direction of natural convection. In this case, also when the exhaust air 22 cools into waste air 23, it is possible to lead condensation water specifically in the flow direction after the counter flow heat exchanger 62 to the exterior U for example through an outlet tube 55 (which most advantageously has a defrosting arrangement, such as a trace heating cable 85).

The applicant has commissioned the re-design of the structure of the counter flow heat exchanger 62 so that it is possible to avoid the compensation of the crossing of the flow ducts, which took place in the counter flow heat exchanger (in other words the cross-wise layout of the flow ducts) and was needed in the ventilation device described in the applicant's secret applications, and to avoid the resulting reduction in the cross-sectional area of the flow ducts.

In the counter flow heat exchanger 62 described here, the inlets and outlets of the fresh air duct 62A of the counter flow heat exchanger and of the exhaust duct 62B of the counter flow heat exchanger are namely most advantageously located on a different level but still on the same side as the corresponding part of the flow duct respectively preceding the counter flow heat exchanger 62 in the flow direction (suction duct 66 in terms of the exhaust duct 62B of the counter flow heat exchanger and pre-heating duct 65 in terms of the fresh air duct 62A of the counter flow heat exchanger). In this way, it is sufficient that the air flow is just turned at a bend 34, 35 not only to the opposite vertical direction but also from one level to another, in which case the air flows going from the interior S to the exterior direction U and from the exterior U to the interior S direction only cross in the counter flow heat exchanger 62.

In other words: the fresh air duct and exhaust air duct have been arranged to run in the first vertical direction side by side without crossing each other, first in the first direction against each other and then after the bend 34, 35 in the opposite vertical direction still against each other, ending up in the counter flow heat exchanger 62. The inlet and outlet of the fresh air duct 62A of the counter flow heat exchanger and of the exhaust air duct 62B of the counter flow heat exchanger are at the opposite ends of the counter flow heat exchanger 62 mutually on the same side. In this way, the crossing of the fresh air duct and exhaust air duct with each other on the outside of the counter flow heat exchanger 62 is avoidable. In this way, it is possible to avoid that some of the cross-sectional area of the ventilation device 100 would be wasted for the crossing of the air ducts taking place on the outside of the counter flow heat exchanger 62.

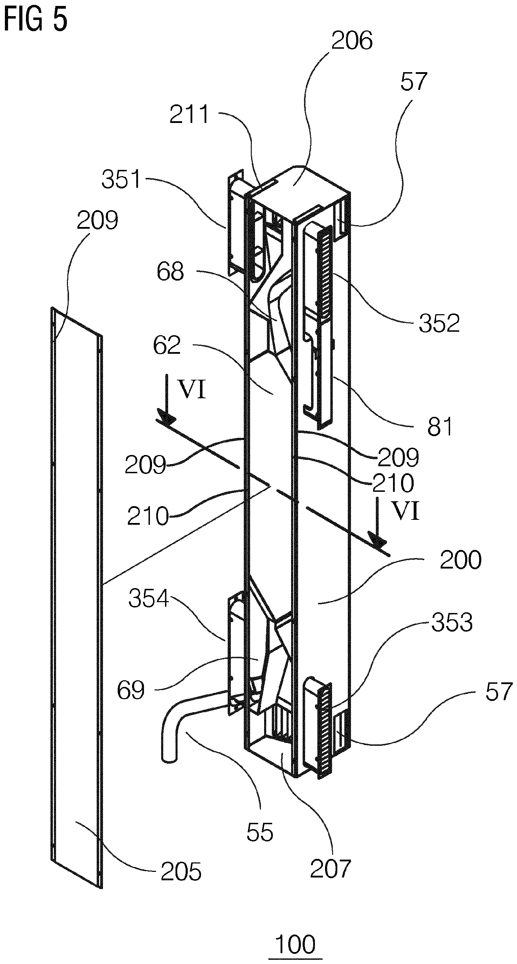

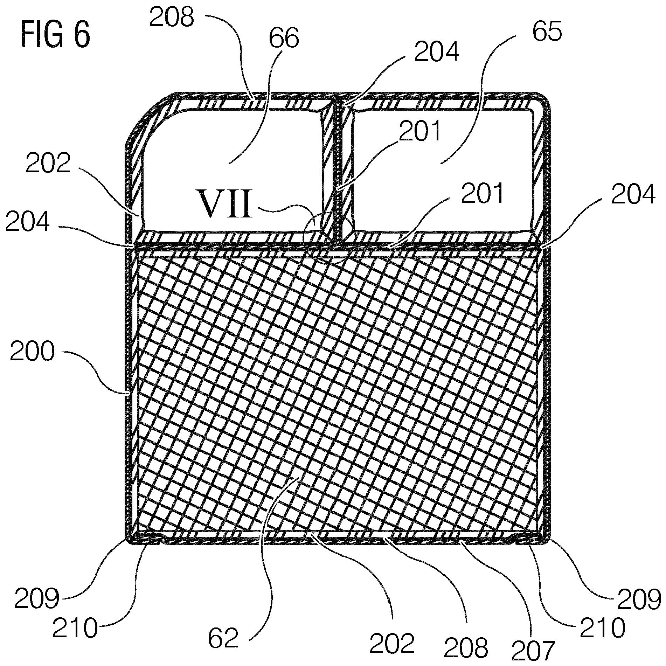

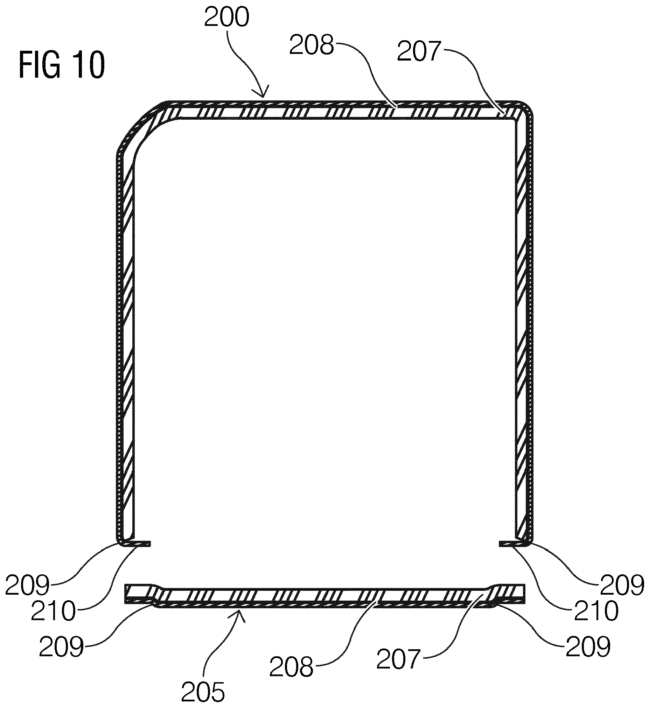

FIG 6 shows cross section VI-VI of the ventilation device 100 (cf. FIG 5). Casing 200 presented in FIG 10 seals the internal structure of the ventilation device 100, especially the ducts of the ventilation device 100, air tight in joint action with projections 204 and a rubber elastic layer 202, namely so that it is possible to prevent a stray flow between the pre-heating duct 65 and the suction duct 66, or it is at least possible to reduce the stray flow. On the other hand, the casing 200 also seals the internal structure of the ventilation device 100 air tight in joint action with the projections 204 and the rubber elastic layer 202 so that the travel of the air flow from the pre-heating duct 65 to the fresh air duct 62A of the counter flow heat exchanger and on the other hand also from the suction duct 66 to the exhaust air duct 62B of the counter flow heat exchanger is controlled, in other words so that it is possible to prevent the stray flow, or it is at least possible to reduce the stray flow.

The dimensions of the internal structure and casing 200 of the ventilation device 100 are most advantageously such that the internal structure or the projections of the internal structure compress the rubber elastic layer 202 against the casing 200. When the casing 200 is implemented most advantageously of metal, such as sheet metal 1 mm thick, the structure can be assembled by edging even from one sheet. The casing 200 can also be manufactured from some other material that guarantees sufficient stiffness, such as steel, aluminium and under certain conditions from glass, plastic or plastic composite, wood composite or even treated wood.

It is possible to arrange the casing 200 to be trough-shaped (for example in the shape of the letter C or U). Peaks 210 are most advantageously implemented at the edges of the trough, by means of which peaks 210 the cover 205 of the casing can be fastened. In this case, the cover 205 of the casing most advantageously comprises folds 209 made at the edges, which folds 209 are pushed in the assembly stage under the peaks 210 to close the casing 200.

On the inner surface of the casing 200 and on the inner surface of the cover 205 of the casing is a rubber elastic layer 202 most preferably everywhere but most advantageously at least at those internal structures that are used for air sealing. The rubber elastic layer 202 is most advantageously of expanded rubber, expanded plastic or other elastic material with sufficiently small thermal conductivity. The thermal conductivity of a material with sufficiently good heat insulation capacity is for example less than 0.1 W/mK. Depending on the material, the material thickness used can be for example 3-10 mm.

Elastic materials with sufficient thermal insulating capacity are best suited for use as the rubber elastic layer 202. For example, the air permeability of expanded rubber is sufficiently small in order to form a sufficient air tightness, and rubber elasticity is sufficient for the air tightness accomplished with the compression joint. Moreover, the thermal conductivity of the material is sufficiently small. The advantages of expanded rubber also include the permanence of the rubber elasticity and minor permanent deformation. This feature is utilisable in reassembly work following the disassembly of the ventilation device 100 required by possible maintenance work, in which case the air sealing surface does not necessarily settle into exactly the same point as during original installation. Alternatively, it is possible to use other materials with sufficient rubber elasticity, such expanded plastics or urethane-based materials. If the rubber elasticity is too small, the air tightness of the ventilation device 100 does not necessarily withstand the deformation of the sealing surface caused by mechanical forces resulting from temperature changes or handling throughout the planned lifetime of the device, but it also needs to be sealed with an elastic material.

The rubber elastic layer 202 is most advantageously sheet-like. The rubber elastic layer 202 can be fastened to the casing 200 and to the cover 205 of the casing for example by means of adhesive 208 or two-sided adhesive tape. In tests, we used an expanded rubber insulation that is fastened by adhesive and resembles adhesive tape, where the adhesive surface had been fastened in advance. There are possibly also better ways to fasten with the rubber elastic layer 202, such as spraying the layer onto the inner surface of the casing 200 and onto the inner surface of the cover 205 of the casing, the coating of the surfaces with a rubber elastic layer 202 as early as during the sheet working stage, or it is possible to manufacture items made from a rubber elastic material that are cut to shape and are well seated in terms of their shape.

The projections 204 penetrate into the rubber elastic layer 202 in order to implement air sealing. According to tests carried out by the applicant, a penetration depth of as small as for example 2 mm is sufficient for air sealing when the rubber elastic layer 202 used is an expanded rubber layer of 3 mm and the projections 204 protrude approx. 2 mm.

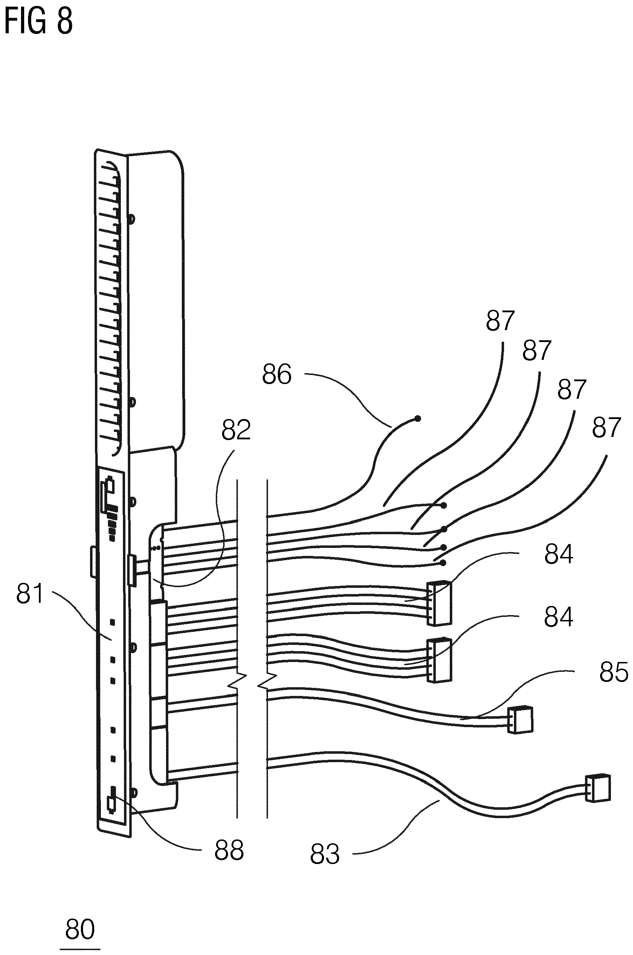

FIG 8 shows a perspective view of an electric system 80 most preferably belonging to the ventilation device 100 (the electric system 80 has been presented while removed from the ventilation device 100). The electric system 80 can also be implemented on the outside of the ventilation device 100.

The electric system 80 comprises a user interface/panel 81, circuit board 82, power supply and data cable 83, power cable 84 of the blower, trace heating cable 85, CO₂ sensor cable 86 and temperature sensor cable 87. The electric system 80 advantageously comprises a sound meter, for example a microphone 88, the signal of which is analysed by means of a logic on the circuit board 82. The air flow generated by the air moving apparatuses can be adjusted on the basis of the feedback of the internal or external sound meter.

The sensing system (for example microphone 88, CO₂ sensor with cable 86) can also be located on the outside of the ventilation device 100 just as long as the ventilation device 100 comprises in this case an information receiving arrangement for the receiving of information from the sensing system or its part.

In addition to this or as an alternative to this, the ventilation device 100 can be connected to an external sound meter, in which case the air flow generated by the air moving apparatuses can be adjusted on the basis of the feedback of the sound meter. The external sound meter can be implemented as an application of a smart telephone or in a house automation system.

The ventilation device 100 has most advantageously been configured to adjust the air flow generated by at least some air moving apparatuses on the basis of at least one measurable air quality parameter.

The ventilation device 100 has most advantageously been configured to increase or decrease the air flow generated by the air moving apparatuses between the initial value and target value in several steps in order to increase or decrease the time derivative of the operating sound of the air moving apparatuses or to increase or decrease the change in the operating sound per a unit of time. The steps have advantageously been defined experimentally, most advantageously on the basis of sound measurement.

The steps can be saved in a look-up table.

The magnitude of a step is most advantageously selected to be smaller than the change specified as the maximum permitted change in the sound pressure or sound power per a unit of time.

The air moving apparatuses can be controlled for example by modulating the electric power supplied to them for example by means of pulse width modulation. In this case, a step could correspond to the change in the pulse width.

The ventilation device 100 most preferably also comprises a bypass function to bypass the decrease or increase function taking place in several steps between the initial value and target value of the air flow. The bypass function can be settable and/or removable by means of a switch, such as a push button, clock control, timer control or a combination of these. In addition to this or as an alternative to this, the switch can be controllable by means of an application of a smart telephone or by means of a house automation system.

The bypass function for the increase or decrease of the air flow taking place in several steps can be switched on and/or off on the basis of sensor control. The sensor control can comprise at least one presence sensor and/or at least one infrared sensor. In addition to this or as an alternative to this, the sensor control information can be obtained from a house automation system.

In an advantageous embodiment, the air moving apparatuses of the ventilation device 100 are at least one inlet air blower 64 for the fresh air duct and at least one exhaust air blower 63 for the exhaust air duct. In this case, the inlet air blower 64 and the exhaust air blower 63 are each most preferably run so that they produce from the fresh air duct a volume flow that is equal to, smaller than or greater than from the exhaust air duct so that the interior S does not become pressurised, underpressurised or overpressurised with respect to the exterior U. Instead of an individual ventilation device 100, corresponding control can be implemented by means ventilation devices 100 of a decentralised ventilation system.

In this case, the inlet air blower 64 and the exhaust air blower 63 are most advantageously rotated with respect to each other at the same or a different speed. In this case, the steps have most preferably been selected so that the intensity of the sound frequency caused by the respective speed of rotation of each blower 63, 64 and by the difference in the rotation of the blowers 63, 64 as well as the harmonic multiples of this intensity are kept smaller than the pre-determined level, it is possible to best avoid a rapid change in the intensity of the sound frequency and/or the emergence of sudden buzzing or whirring caused by different speeds of rotation, which possibly disturb the quality of sleep especially much.

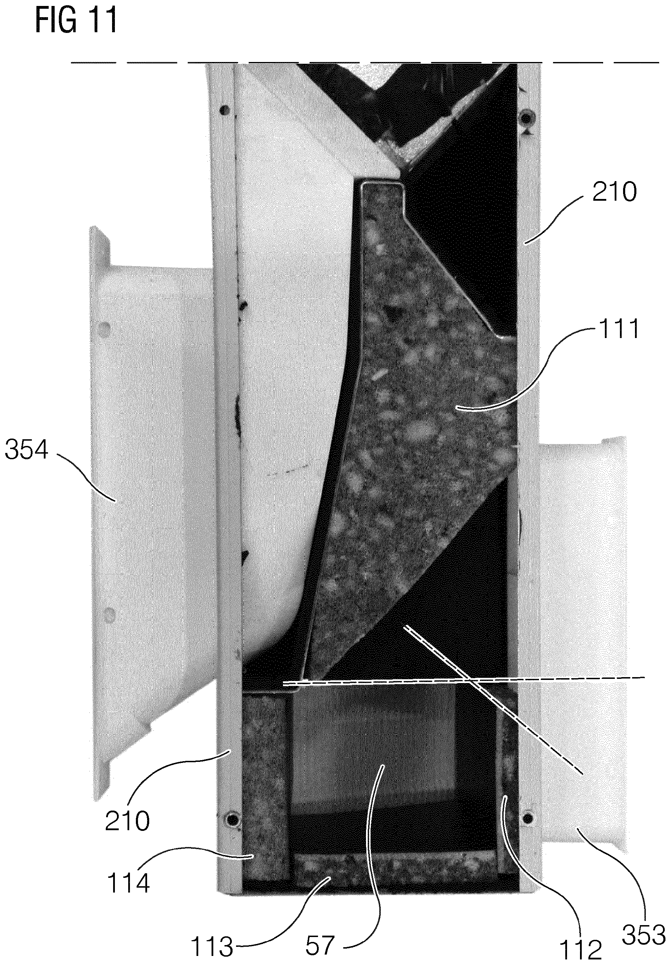

FIG 11 shows a cross section of the ventilation device 100 at the inlet 53 of the exhaust air duct. The nozzle 353 is in place. FIG 11 shows sound-insulated ducts made from recycled foam sheet in the lower end of the ventilation device 100. Pieces of different thicknesses cut to shape from recycled foam sheet have been glued to the walls of the flow duct located at the beginning of the suction duct to serve as damping sheets 111, 112, 113, 114 so that sound can be dampened as well as possible without essentially impairing the air flow. The damping sheet 112 has been installed so that the upper edge of the damping sheet 112 is on the level of the upper edge of the filter 57 or higher. In this case, the damping sheet 112 covers essentially the filter 57 location. The structure works as a sound trap for the operating sound of the exhaust air blower 63 of the ventilation device 100: the exhaust air blower 63 located in the flow direction after the filter 57 sucks exhaust air 22 through a nozzle 353. In practice, the exhaust air 22 flows from above the damping sheet 112 past the damping sheet 112 and through the filter 57 located beneath the upper edge of the damping sheet 112. After the filter 57, the exhaust air blower 63 pushes the air flow into the suction duct 66 (see FIG 3). The operating sound of the exhaust air blower 63 comes through the filter 57 and is first directed at the damping sheet 112, which has a considerable impact on the sound level of the ventilation device 100. On the other hand, there is an opening in the casing 200 of the ventilation device 100 at the damping sheet 112, which opening reduces the resonance of sound in the casing 200.

The sound carried through the filter 57 is also dampened by a damping sheet 114 extending to the height of the edge of the filter 57.

A corresponding arrangement can also be used in connection with the inlet 51 of fresh air 20 of the ventilation device 100. However, the noise heard on the exterior U side is not necessarily as critical as the noise heard on the interior S side.

The invention should not be understood to be limited only by the below claims, but the invention is to be understood to include all their legal equivalents and the combinations of the embodiments presented.

### List of reference numbers used:

- U: exterior
- S: interior
- 1: ventilation window
- 2: frame
- 3: inner sash
- 4: outer sash
- 5: pane
- 6: pane
- 7: light opening area
- 8: outer sash hinge
- 9: frame lining
- 10: intermediate space
- 20: fresh air
- 21: inlet air
- 22: exhaust air
- 23: waste air
- 33: separating wall
- 34: bend
- 35: bend
- 51: inlet
- 52: outlet
- 53: inlet
- 54: outlet
- 55: outlet tube
- 57: filter
- 62: counter flow heat exchanger
- 62A: fresh air duct of counter flow heat exchanger
- 62B: exhaust air duct of counter flow heat exchanger
- 63: exhaust air blower
- 64: inlet air blower
- 65: pre-heating duct
- 66: suction duct
- 68: jet flow duct
- 69: jet flow duct
- 80: electric system
- 81: user interface/panel
- 82: circuit board
- 83: power supply and data cable
- 84: power cable of blower
- 85: trace heating cable
- 86: CO₂ sensor cable
- 87: temperature sensor cable
- 88: microphone
- 100: ventilation device
- 111: damping sheet
- 112: damping sheet
- 113: damping sheet
- 114: damping sheet
- 200: casing
- 201: sheet metal
- 202: rubber elastic layer
- 203: interior
- 204: projection
- 205: cover of casing
- 206: ceiling
- 207: bottom
- 208: adhesive
- 209: fold
- 210: peak
- 211: shoulder
- 351: nozzle
- 352: nozzle
- 353: nozzle
- 354: nozzle

## Claims

1. A ventilation device (100), **characterised in that:**
The ventilation device (100) comprises at least one fresh air duct (65, 62A, 68) which is in a flow connection between the exterior (U) and interior (S) and at least one exhaust air duct (66, 62B, 69) which is in a flow connection between the interior (S) and exterior (U), which fresh air duct (65, 62A, 68) and exhaust air duct (66, 62B, 69) run through a counter flow heat exchanger (62).
In addition to this, the ventilation device (100) comprises air moving apparatuses (63, 64) - such as at least one blower - in order accomplish an air flow both through the fresh air duct (65, 62A, 68) and through the exhaust air duct (66, 62B, 69).
The fresh air duct (65, 62A, 68) and the exhaust air duct (66, 62B, 69) have been arranged to run in the first vertical direction side by side without crossing each other, first in the first direction against each other and then after a bend (34, 35) in the opposite vertical direction still against each other, ending up in a counter flow heat exchanger (62), where the inlet and outlet of the fresh air duct (62A) of the counter flow heat exchanger and of the exhaust air duct (62B) of the counter flow heat exchanger are at the opposite ends of the counter flow heat exchanger (62) mutually on the same side, in which case the crossing of the fresh air duct (65, 62A, 68) and the exhaust air duct (66, 62B, 69) with each other on the outside of the counter flow heat exchanger (62) is avoidable.

2. A ventilation device (100) according to any one of the preceding claims, **where:** the fresh air duct (65, 62A, 68) comprises a pre-heating duct and (65) the exhaust air duct (66, 62B, 69) comprises a suction duct (66), which run in the vertical direction side by side.

3. A ventilation device (100) according to claim 2, **where:**
moreover, the pre-heating duct (65) and the suction duct (66) run on the same level.

4. A ventilation device (100) according to any one of the preceding claims, **where:** the bend (34, 35) has been implemented not only to turn the current air flow to a different vertical direction but also to transfer the air flow from the first level to the second level.

5. A ventilation device (100) according to claim 4, **where:** the counter flow heat exchanger (62) is on the second level.

6. A ventilation device (100) according to any one of the preceding claims, **where:** the fresh air duct (65, 62A, 68) and the exhaust air duct (66, 62B, 69) are most advantageously limited at least partially to a rubber elastic layer (202).

7. A ventilation device (100) according to claim 6, **where:** the rubber elastic layer (202) seals the fresh air duct (65, 62A, 68) and the exhaust air duct (66, 62B, 69) air-tightly from each other.

8. A ventilation device (100) according to claim 6 or 7, **where:**
the rubber elastic layer (202) has been fastened to the inner surface of the casing (200) of the ventilation device (100), and
the sealing has been implemented by compressing the rubber elastic layer (202) between the casing (200) and internal structure of the ventilation device (100).

9. A ventilation device (100) according to any one of the preceding claims, **where:** the fresh air duct (65, 62A, 68) comprises a jet flow duct (68) in the flow direction after the counter flow heat exchanger (62).

10. A ventilation device (100) according to claim 9, **where:** the jet flow duct (68) has been arranged to turn the inlet air (21) from the horizontal level upwards, most advantageously 15-75 degrees.

11. A ventilation device (100) according to any one of the preceding claims, **where:** the exhaust air duct (66, 62B, 69) comprises a jet flow duct (69) in the flow direction after the counter flow heat exchanger (62).

12. A ventilation device (100) according to claim 11, **where:** the jet flow duct (69) has been arranged to turn the waste air (23) from the horizontal level downwards, most advantageously 15-75 degrees.

13. A ventilation device (100) according to any one of the preceding claims, **where:** the air moving apparatuses (63, 64) comprise an exhaust air blower (63) and an inlet air blower (64), which have been sealed from the pressure side.

14. A ventilation device (100) according to any one of the preceding claims, **which ventilation device (100) comprises:** a sound trap (112, 113, 114) in the inlet (54) of the exhaust air (22) in order to dampen the operating sound coming from the air moving apparatus (63), which sound trap (112, 113, 114) has been implemented so that the exhaust air (22) going to the air moving apparatus (63) goes around the sound trap (112, 113, 114).

15. A ventilation window (1), **which comprises:** a frame (2) and at least one sash (3, 4), which determines the light opening area (7), and at least one pane (5, 6) fastened to the sash (3, 4), as well as the ventilation device (100) according to any one of the preceding claims, installed in the vertical frame (3).

16. A heat exchanger (62), especially a counter flow heat exchanger, **characterised in that:** the heat exchanger (62) comprises the first and second channel, the inlet and outlet of both of which are at the opposite ends of the heat exchanger (62) and moreover so that the inlet and outlet of both channels are mutually on the same side of the heat exchanger (62).
